Europäisches Patentamt

European Patent Office

Office européen des brevets

(11) Publication number: **0 470 555 A1**

# EUROPEAN PATENT APPLICATION

(21) Application number: **91113140.7**

(22) Date of filing: **05.08.91**

(51) Int. Cl.⁵: **G02B 17/02, G02B 5/04**

(30) Priority: **06.08.90 IL 95301**

(43) Date of publication of application:
**12.02.92 Bulletin 92/07**

(84) Designated Contracting States:
**AT BE CH DE DK ES FR GB GR IT LI LU NL SE**

(71) Applicant: **ELOP- ELECTROOPTICS INDUSTRIES LTD.**
**P.O. Box 1165**
**Rehovot(IL)**

(72) Inventor: **Sar-El, Haim Zvi**
**53 Levin Epstein Street**
**Rehovot(IL)**

(74) Representative: **Kraus, Walter, Dr. et al**
**Patentanwälte Kraus, Weisert & Partner**
**Thomas-Wimmer-Ring 15**
**W-8000 München 22(DE)**

(54) **Novel reversing prism.**

(57) A compact dove prism, for use in the visible UV and IR range, of substantially reduced dimensions and quantity of optical material for a performance equal to that, or even better than that of equivalent size conventional dove prisms. The optical transmission is better than that of conventional prisms of equal outer dimensions. The novel dove prism is less sensitive than conventional dove prisms to a deviation of incident light beams which are not quite parallel.

The dove prism comprises two optical wedges (18,19) attached to a mirror (12), with their bases parallel with each other, said adjacent bases being at a certain distance from each other. Between the wedges is air, a vacuum, or any desired gaseous medium. The dove prisms are of much smaller weight and are considerably less expensive than conventional ones.

FIG.4

FIELD OF THE INVENTION

The invention relates to novel compact dove prisms of substantially reduced length and quantity of optical material, thus reducing drastically their weight. They have a higher transmission than that of conventional dove prisms of equal outer dimensions. The smaller overall volume and reduced quantity of optical grade material, with improved transmission, results in a less expensive product with improved performance. Furthermore, the novel dove prism is less sensitive to an impinging beam which is not quite parallel.

BACKGROUND OF THE INVENTION:

Dove prisms are used when it is required to rotate or derotate the optical axis. A conventional dove prism is essentially an optical transmissive element with an odd number of reflecting surfaces, which therefore inverts the order of rays in the plane of reflection only. Geometric considerations and the application of Snell's law to the participating surface of this element make possible an exact determination of the resulting inversion of the reflected rays.

Dove prisms are used to transmit information from a rotating to a stationary object. Amongst conventional uses are rotating mirror cameras, microfilm readers etc. Dove prisms can be used in the visible range, and depending on the optical material used, also in the UV and in infrared. The relatively high absorbance of optical materials in the infrared has hitherto restricted the use of dove prisms in this spectral range. Another aspect is the comparatively high cost of such optical materials. The present invention provides a compact dove prism, the overall dimensions of which are reduced compared with conventional dove prisms and which has a higher transmissivity, yet requires a greatly reduced quantity of optical material. The roofless Abbe or " K " prism has only reflecting faces and is free of absorption considerations. Its length, volume and mounting difficulties are such as to be inferior to the novel optical element of the present invention.

SUMMARY OF THE INVENTION:

According to the present invention there is provided a novel type of dove prism for use in the visible, UV and the infra-red ranges, depending on the optical materials used. The novel prism of the present invention is of reduced length and volume and requires a smaller quantity of optical material and thus has greatly reduced weight. It is characterized by a substantially increased transmission, especially in the infra-red range.

The novel compact dove prism of the invention essentially comprises in combination two optical wedges, the base of which is attached to an optically flat mirror, so that the apex and base edges of these are parallel with each other, with the lower edges at a predetermined distance from each other. The apex angle of the wedges and the distance from each other depend on the desired optical performance and depend of course on the refracting index of the optical material used. The apex angle of each of the wedges is generally of an angle between about $10°$ and $45°$. The adjacent inner surfaces of the wedges define a prism shaped structure, with cut-off upper part. The continuation of these inclined faces of the wedges define the apex angle of the prism, which prism is devoid of solids or liquids, except for a gaseous medium, or even vacuum. In the novel Dove prism the comparatively thin wedges act as absorbers, and thus make such prism useful in the VUV region. The two wedges may be identical or different. The outer surfaces of the Dove prism can be of an angle similar to that of the inner ones with respect to the supporting mirror; the outer edge can make a right angle with said mirror, or even an angle greater than $90°$, as will be illustrated hereinafter. A pair of differently shaped wedges can be used and these can also be unsymmetric. When unsymmetric wedges, such as wedges with an outer pace perpendicular to the mirror are used, this results in a decrease of sensitivity to the parallel nature of the impinging beam.

When used in the infra-red range of the spectrum, the novel Dove prisms have the advantage of significantly reduced absorption losses of the transmitted radiation. For example, when radiation in the 8 $\mu$m to 12 $\mu$m spectral range is transmitted via a conventional germanium Dove prism, having a $45°$ base angle and a square clear aperture of 50 mm side or 100 mm side, the transmission amounts to 0.75 or 0.56 respectively, whereas with the new Dove prisms transmission values of 0.95 and 0.9, respectively are attained.

The invention is described by way of example only with reference to the enclosed schematical drawings, which are not according to scale, and in which:

Fig. 1 is a diagrammatic perspective view of a dove prism constructed in accordance with the principles of the present invention.

Fig. 2 is a logitudinal sectional view taken through the prism substantially along line A-A of Fig. 1.

Fig. 3 is a diagrammatic perspective view of a specific but useful case of Fig. 1 where the outer faces of the optical wedges of the prism are normal to its reflecting base.

Fig. 4 is a longitudinal sectional view taken through the prism substantially along line B-B of Fig. 3.

Fig. 5 is a diagrammatic perspective view of one possible version of a double Dove prism of Fig. 3.

Fig. 6 is a longitudinal sectional view taken through the double prism substantially along the C-C of Fig. 5.

Fig. 7 is a diagrammatic perspective view of second possible version of a double dove prism of Fig. 3.

Fig. 8 is a longitudinal sectional view taken through the double prism substantially along line D-D of Fig. 7.

DESCRIPTION OF THE PREFERRED EMBODIMENT:

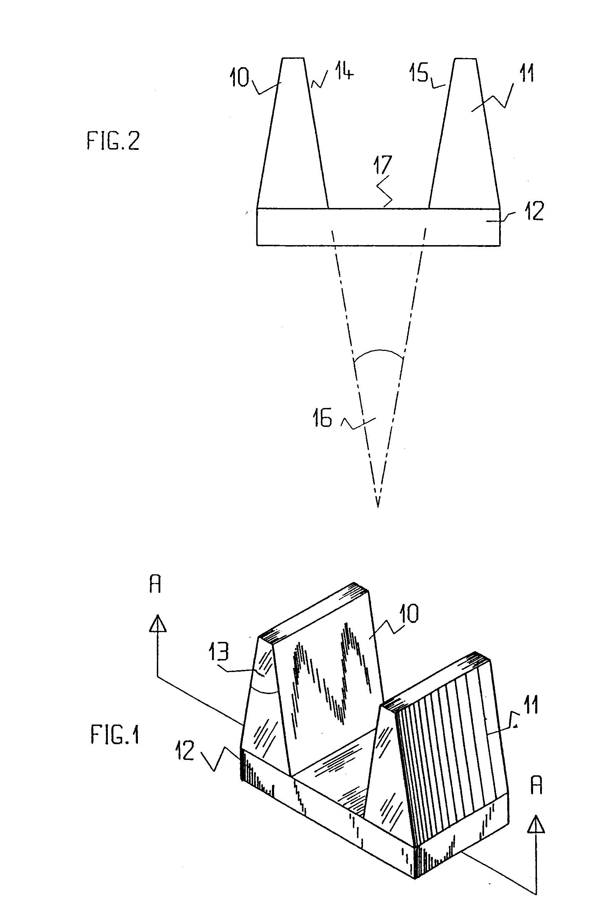

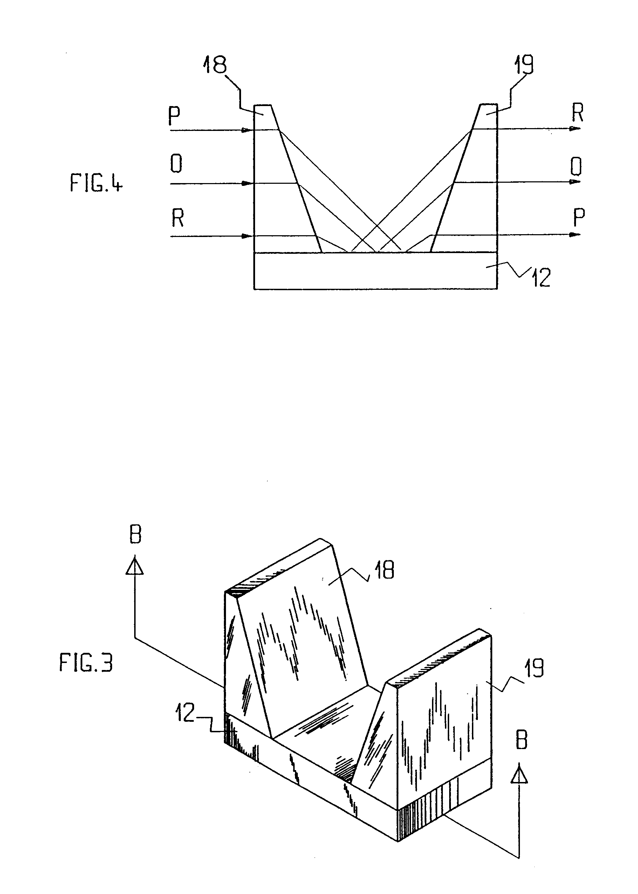

Fig. 1 is a diagrammatical perspective view of a Dove prism according to a preferred embodiment. Two equal optical wedges, 10 and 11, are properly placed on an optically flat mirror 12 and attached so that their apex and base edges are parallel. The apex angle of the wedges as well as their mutual distance are material dependent through the refracting index. The apex angle 13 of each wedge is less than $45^\circ$, and may be as low as $10^\circ$, its exact value depends on the relevant material used. The novel Dove prism of this arrangement is illustrated in Fig. 2 which is a longitudinal sectional view of Fig. 1 taken along line A-A. The novel Dove prism is defined by the inner faces 14 and 15 of wedges 10 and 11 respectively, whose continuation generates an apex angle 16. Thus, the prism looks turned with it apex angle 16 on the side of mirror 12, in contrast to the known state of a conventional Dove prism. Further, the space of the prism is free of solids or liquids, except gas, e.g. air; or even vacuum. The fact that only two thin wedges 10 and 11 play the role of absorbers in this embodiment, makes it suitable for use in the VUV as well as in the infra-red region. Using unsymmetrical wedges, 18 and 19, as in Fig. 3, with their outer faces perpendicular to mirror 12, additional optical benefit is obtained, i.e. a relatively less acute demand for the parallelity of the impinging beam. Representative ray traces, P X and R, are shown in Fig. 4 for illustration purposes, Since each ray, P Q or R in Fig. 4, is remarkably refracted on emerging from 18, mirror 12 is shorter relative to that of a conventional Dove prism.

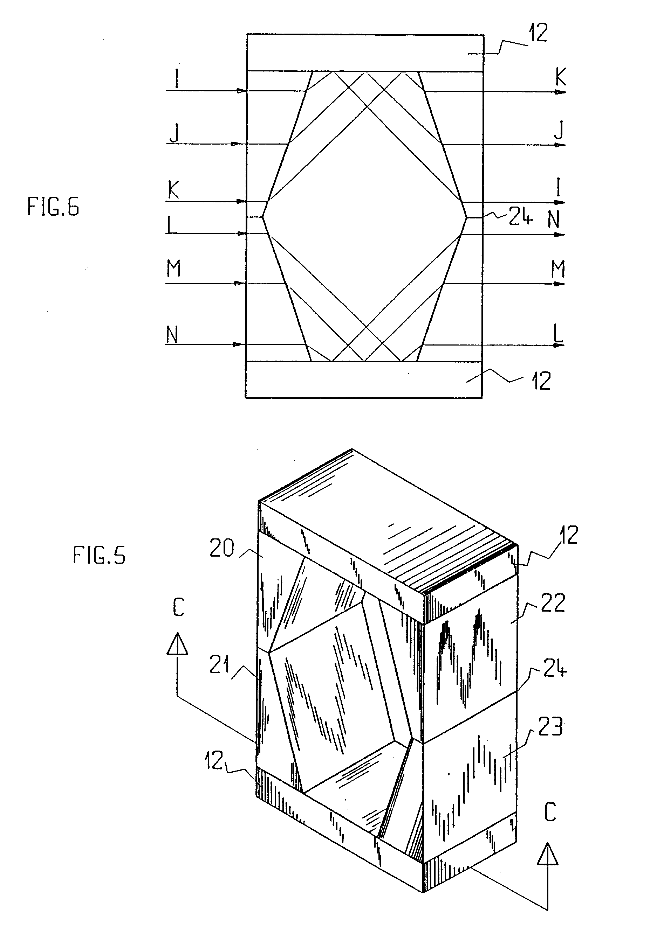

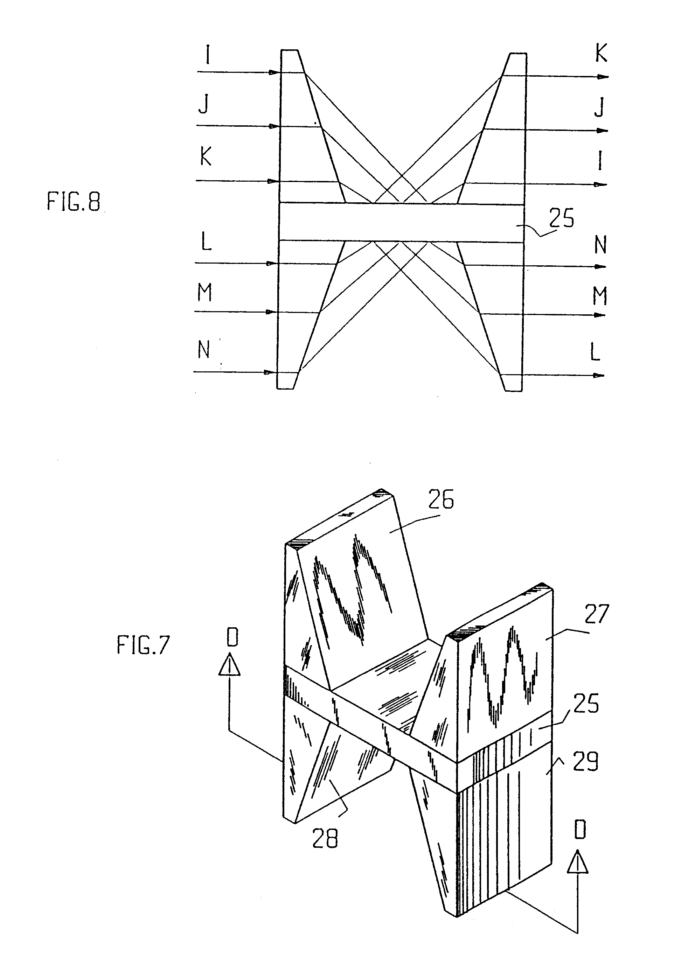

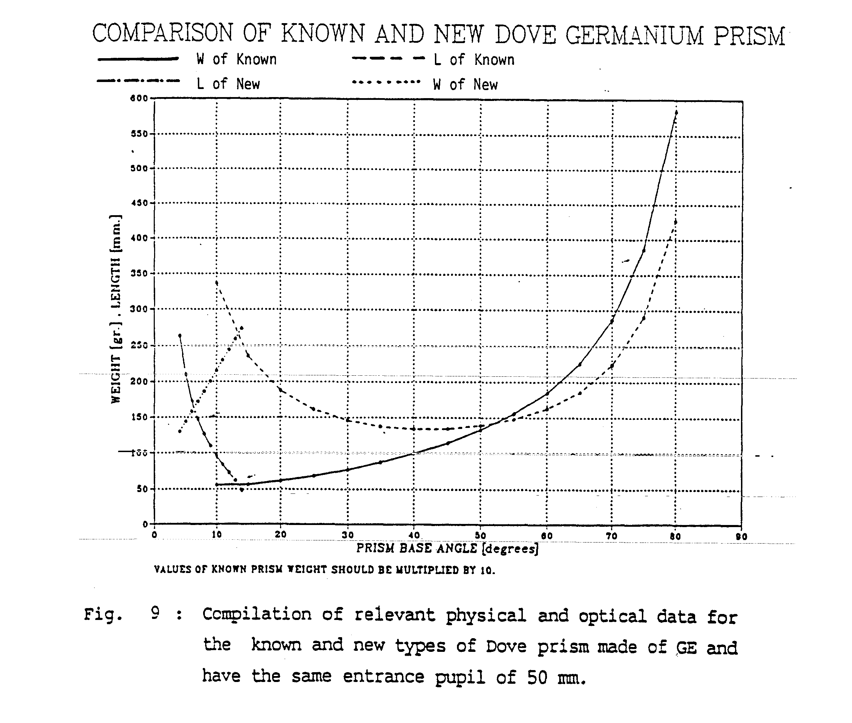

Two options for using such embodiments in a double prism mode are available. One is shown diagrammatically in Fig. 5 in a perspective view, where two prisms share their common base. Its longitudinal sectional view is depicted in Fig. 6 with six ray traces for illustration. The other option is shown diagrammatically in Fig. 7 where two prisms share both sides of mirror 25. Again, six representative ray traces, I J K L M and N, illustrate in Fig. 8 the mode of operation.

To assembling the first option of double prism (Fig. 5) assume two Dove prisms of Fig. 3 that are properly joined top to top and cemented together. Line 24 in Fig. 5 indicates the plane of attachment.A nother way, although more expensive in production, is to produce wedges 20 and 21, as well as 22 and 23, from one piece of material and then to attach mirrors 12. The second option of double Dove prism of the preferred embodiment, as shown in Fig. 7, is assembled by properly cementing four wedges 26, 27, 28 and 29 to a two-side mirror 25.

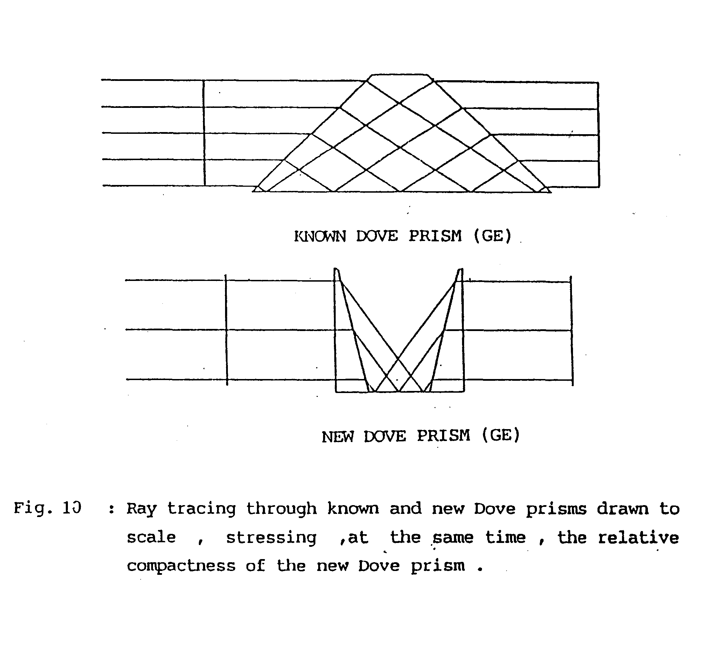

Fig. 9 is a graph compiling data for conventional and novel Ge dove prism, having and identical entrance pupil of 50 mm. Fig. 10 is a ray tracing through a conventional and a novel Dove prism, according to scale, illustrating the compactness of the novel Dove prism.

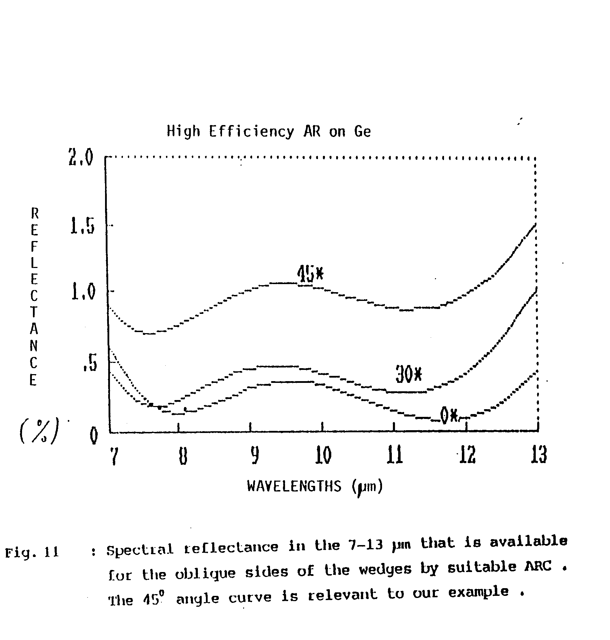

Fig. 11 illustrates spectral reflectance values in the 7 $\mu$m to 13 $\mu$m range.

DESCRIPTION OF THE PREFERRED EMBODIMENT:

In order to construct the known or the novel compact Dove prism one has to use the exact relevant formulae. As a representative working example, we took an entrance aperture of 50 mm for the prism made of Ge. A compilation of both prisms data can be found in Fig. 1 where the weight, W, and the length, L, of the prisms are drawn as a function of prism angle. For the known dove prism, the angle parameter is as written, i.e. the prism base angle. usually taken as $45^\circ$. For the novel Dove prism it is the head angle of a wedge assuming both wedges to have the same size and shape. In our current example we used a right angle wedge with $10^\circ$ degrees apex angle. As indicated in the bottom line of Fig. 9, the figures for the weight of the known prism should be multiplied by 10 in order to get the true weight. The relevant data are, therefore, as follows:

Table 1: Compilation of relevant physical and optical proper-
ties of the two types, known and new Dove prism,
made of the same optical material.

| PRISM TYPE | MATERIAL | ANGLE | LENGTH [mm.] | WEIGHT [gr.] | TRANSMITTANCE 3-5 $\mu$m | 8-12 $\mu$m |
|---|---|---|---|---|---|---|
| KNOWN | Ge | 45° | 134.1 | 1122 | 0.91 | 0.75 |
| NEW | Ge | 10° | 57.3 | 265 | 0.98 | 0.95 |

An exact ray tracing for the above two prisms is shown in Fig. 10 where both prisms are drawn to scale. Reduction of radiation reflection loss by coating the oblique side of wedge with a suitable ARC, is shown in Fig. 11 for the new prism in the spectral range 7-13 $\mu$m for three different refracting rays. The refracting angle that is relevant to our case is 45°, and as seen from the Fig. 3 reflectance mounts to about 1% at most.

**Claims**

1. A novel compact dove prism of increased light transmission, comprising a flat mirror to which there are attached at a certain distance from each other, two optical wedges, with their bases parallel to each other, their internal surfaces defining a material = free prism with cut-off apex, the apex angle being defined by the inclination of the inner faces of the wedges.

2. A dove prism according to claim 1, where the two wedges are equal ones with an apex angle of from about 10° to about 45°.

3. A dove prism according to claim 1 or 2, where the cross-section of the wedges is a right-angle triangle with cut-off apex.

4. A dove prism according to any of claims 1 to 3, for use in the IR region, made of an optically suitable material transmitting in this range.

5. A dove prism according to any of claims 1 to 4, made of germanium.

6. A dove prism according to any of claims 1 to 5, where in the space between the two wedges there is air, vacuum or any other gaseous medium, suitable for the intended wave-length.

7. A double dove prism wherein two dove prisms according to any of claims 1 to 6, are attached to each other with the back of their mirror surfaces facing each other.

8. A composite double dove prism wherein two identical dove prisms claimed in any of claims 1 to 6 are in a configuration with the two mirrors facing each other, with apexes of the wedges of one dove prism being close to the apexes of the wedges of the second dove prism.

9. A composite double dove prism wherein two identical dove prisms claimed in and of claims 1 or 7 are in a configuration with the two mirrors facing each other.

4

FIG.2

10    14    15    11

17

12

16

FIG.1

A

13    10

12    11

A

FIG.4

P

O

R

R

O

P

18

19

12

FIG.3

B

B

18

19

12

FIG.6

FIG.5

FIG.8

FIG.7

# COMPARISON OF KNOWN AND NEW DOVE GERMANIUM PRISM

| | | |
|---|---|---|
| ———— W of Known | — — — L of Known | |
| —·——·—·— L of New | ·········· W of New | |

VALUES OF KNOWN PRISM WEIGHT SHOULD BE MULTIPLIED BY 10.

Fig. 9 : Compilation of relevant physical and optical data for the known and new types of Dove prism made of GE and have the same entrance pupil of 50 mm.

EP 0 470 555 A1

KNOWN DOVE PRISM (GE)

NEW DOVE PRISM (GE)

Fig. 10 : Ray tracing through known and new Dove prisms drawn to scale , stressing ,at the same time , the relative compactness of the new Dove prism .

## High Efficiency AR on Ge

Fig. 11 : Spectral reflectance in the 7-13 μm that is available for the oblique sides of the wedges by suitable ARC . The 45° angle curve is relevant to our example .

European
Patent Office

EUROPEAN SEARCH
REPORT

Application Number

EP 91 11 3140

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 005 044   (PILKINGTON P.E. LTD.)<br>* page 1, line 104 - page 2, line 61; figure *<br>– – – | 1-6 | G 02 B 17/02<br>G 02 B 5/04 |
| X | FR-A-2 561 003   (THOMSON-CSF)<br>* page 4, line 22 - page 6, line 3; figure 2 *<br>– – – | 1,2,4-6 | |
| A | US-A-3 217 623   (HOTCHKISS)<br>* column 2, lines 55-64; figure 2 *<br>– – – – – | 7 | |

TECHNICAL FIELDS
SEARCHED (Int. Cl.5)

G 02 B

The present search report has been drawn up for all claims

| Place of search | Date of completion of search | Examiner |
|---|---|---|
| Berlin | 11 November 91 | VON MOERS F |